# EUROPÄISCHE PATENTANMELDUNG

(11) **EP 4 123 810 A1**
(43) Veröffentlichungstag der Anmeldung: **25.01.2023**
(21) Anmeldenummer: 21186551.4
(22) Anmeldetag: 20.07.2021
(51) Int. Cl.: H01M 50/256, H01M 50/509, A45F 3/08, B25F 5/00, H01M 50/204, H01M 50/247

(54) **RÜCKENTRAGVORRICHTUNG**

(71) Anmelder: Hilti Aktiengesellschaft, 9494 Schaan (LI)
(72) Erfinder: Janecke, Andreas, 81245 München (DE)
(74) Vertreter: Hilti Aktiengesellschaft Corporate Intellectual Property

(57) **Zusammenfassung**

Rückentragvorrichtung mit einer Traggurteinheit und einer daran befestigten Akkupackaufnahme zur Aufnahme eines Akkupacks, und mit einer Anschlusseinrichtung zum Anschließen eines handgeführten Elektrogeräts, wobei die Rückentragvorrichtung eine Konfigurationsschnittstelle aufweist, mittels welcher eine über die Anschlusseinrichtung auszugebende Energie bezüglich Strom und/oder Spannung konfigurierbar ist.

## Beschreibung

Die vorliegende Erfindung betrifft eine Rückentragvorrichtung mit einer Traggurteinheit und einer daran befestigten Akkupackaufnahme zur Aufnahme eines Akkupacks, und mit einer Anschlusseinrichtung zum Anschließen eines handgeführten Elektrogeräts. Der Akkupack ist zur Energieversorgung eines handgeführten Elektrogeräts vorgesehen.

EP 3 605 784 A1 offenbart eine Tragvorrichtung, mit einem Tragrahmen und einem von dem Tragrahmen getragenen Energiespeicher. Die Tragvorrichtung verfügt weiterhin über eine Umformereinrichtung zum Umformen eines von dem Energiespeicher bezogenen elektrischen Stroms und über eine elektrischen Anschlusseinrichtung zum Anschließen eines Verbrauchers. Die Umformereinrichtung wandelt Gleichstrom in einen Wechselstrom um.

US 5 929 597 A beschreibt ein tragbares Energieversorgungssystem mit einem Batteriepack und einem kabelgebundenen Adapter, der elektrisch mit dem Batteriepack verbunden und zum Anschluss an eine elektrische Handwerkzeugmaschine bestimmt ist. Der kabelgebundene Adapter weist einen Spannungswähler auf.

DE 20 2013 102 928 U1 offenbart eine Rucksack-Typ-Leistungsversorgung, die eine aufladbare Batterie und eine mit einem Schalter ausgestattete Betriebseinheit umfasst, wobei der Schalter dazu ausgelegt ist, die aufladbare Batterie zu aktivieren oder zu deaktivieren.

Es ist Aufgabe der vorliegenden Erfindung eine Rückentragvorrichtung anzugeben, die eine erhöhte Einsatzvielfalt begünstigt.

Die Aufgabe wird dadurch gelöst, dass die Rückentragvorrichtung eine Konfigurationsschnittstelle aufweist, mittels welcher eine über die Anschlusseinrichtung auszugebende Energie bezüglich Strom und/oder Spannung konfigurierbar ist.

Die Erfindung schließt die Erkenntnis ein, dass aus dem Stand der Technik bekannte Rückentragvorrichtungen typischerweise auf einen bestimmten elektrischen Werkzeugtyp ausgerichtet und kaum modular sind. Die erfindungsgemäß vorgesehene Konfigurationsschnittstelle schafft die Grundlage für breites Einsatzgebiet der Rückentragvorrichtung. So kann beispielsweise vorgesehen sein, dass eine Spannung sowohl bezüglich Amplitude als auch bezüglich Frequenz konfigurierbar ist. Es hat sich als vorteilhaft herausgestellt, wenn für die Spannung eine Frequenz von 50Hz und/oder 60Hz konfigurierbar ist. In einer bevorzugten Ausgestaltung kann für die Spannung eine Sinusspannungsprofil und/oder ein Rechteckspannungsprofil vorgegeben werden.

In einer besonders bevorzugten Ausgestaltung ist die Akkupackaufnahme ausgebildet, gleichzeitig zwei Akkupacks aufzunehmen. Es hat sich als vorteilhaft herausgestellt, wenn die Akkupackaufnahme ausgebildet ist, gleichzeitig zwei Akkupacks gleichen Typs aufzunehmen. In einer weiteren besonders bevorzugten Ausgestaltung umfasst die die Rückentragvorrichtung eine Umschalteinrichtung, mittels welcher zwischen einer Serienschaltung und einer Reihenschaltung der zwei Akkupacks umgeschaltet werden kann. Somit kann, im Falle einer Serienschaltung der zwei Akkupacks, eine Verdopplung der über die Anschlusseinrichtung auszugebenen Spannung ohne die Verwendung eines Gleichspannungswandlers erreicht werden. Selbstverständlich kann die die Umschalteinrichtung auch gleichzeitig mit einem Gleichspannungswandler betrieben werden. Es hat sich als vorteilhaft herausgestellt, wenn die Umschalteinrichtung elektrisch und/oder signaltechnisch mit der Konfigurationsschnittstelle verbunden ist. Derart kann beispielsweise eine Umschaltung auf eine Reihenschaltung der zwei Akkupacks über die Konfigurationsschnittstelle bewirkt werden.

In einer weiteren besonders bevorzugten Ausgestaltung weist die Rückentragvorrichtung einen Wechselrichter oder einen Gleichspannungswandler auf. Es hat sich als vorteilhaft herausgestellt, wenn die die Rückentragvorrichtung sowohl einen Wechselrichter als auch einen Gleichspannungswandler aufweist. Derart kann durch die Rückentragvorrichtung ein besonders breites Spektrum von Spannungen und/oder Strömen bereitgestellt werden. Es hat sich als vorteilhaft herausgestellt, wenn die Umschalteinrichtung elektrisch und/oder signaltechnisch mit dem Wechselrichter und/oder dem Gleichspannungswandler verbunden ist. Derart kann beispielsweise eine Ausgabespannung und/oder ein Ausgabestrom des Wechselrichters und/oder des Gleichspannungswandlers vorgegeben werden.

In einer besonders bevorzugten Ausgestaltung ist die die Konfigurationsschnittstelle drahtlos ausgebildet. Die Konfigurationsschnittstelle kann beispielsweise ausgebildet sein, ein oder mehrere Funkstandards aus der Gruppe: WLAN, NFC, Bluetooth bedienen zu können. Es hat sich als vorteilhaft herausgestellt, wenn die Rückentragvorrichtung eine mobile Bedieneinheit aufweist oder der Rückentragvorrichtung eine mobile Bedieneinheit zugeordnet ist. Die Bedieneinheit ist vorteilhafterweise ausgebildet, eine drahtlose Verbindung mit der Konfigurationsschnittstelle eingehen zu können. Die mobile Bedieneinheit kann beispielsweise eine Smartphone oder eine Smartwatch sein. Es hat sich als vorteilhaft herausgestellt, wenn in einem Speicher der mobilen Bedieneinheit ein Computerprogrammprodukt abgelegt ist, in welchem die Konfigurationsschnittstelle implementiert ist.

Alternativ oder zusätzlich kann die Konfigurationsschnittstelle kabelgebunden und/oder kann die an Konfigurationsschnittstelle an der Rückentragvorrichtung angeordnet sein. Es hat sich als vorteilhaft herausgestellt, wenn die Konfigurationsschnittstelle als Touchscreen oder als Schalterfeld ausgebildet ist oder ein solches aufweist. In einer weiteren besonders bevorzugten Ausgestaltung weist die Konfigurationsschnittstelle einen Flash-EEPROM auf, in dem ein Parameter, der eine gewünschte Ausgabespannung und/oder einen gewünschter Ausgabestrom des Wechselrichters und/oder des Gleichspannungswandlers repräsentiert, durch einen Benutzer abgelegt werden kann.

In einer weiteren besonders bevorzugten Ausgestaltung ist die Anschlusseinrichtung modular ausgebildet. Die Anschlusseinrichtung kann einen Universalsockel aufweisen, an dem verschiedene Steckdosen unterschiedlichen Typs angebracht werden können. Bevorzugte Typen sind IEC 60309 blau (200-250 V, 50/60 Hz), rot (380-480 V, 50/60 Hz) und grün (20-500 V, 60-500 Hz).

In einer besonders bevorzugten Ausgestaltung weist die Rückentragvorrichtung zwei Schultergurte, vorzugsweise genau zwei Schultergurte auf. Ein erster der Schultergurte kann als linker Schultergurt ausgebildet oder bestimmt sein. Ein zweiter der Schultergurte kann als rechter Schultergurt ausgebildet oder bestimmt sein. In einer weiteren besonders bevorzugten Ausgestaltung weist der Schultergurt einen biegeelastischen Schulterbügel auf. Alternativ kann der Schultergurt durch einen biegeelastischen Schulterbügel gebildet sein. Es hat sich als vorteilhaft herausgestellt, wenn die Rückentragvorrichtung und/oder die Traggurteinheit in ihrem oberen Drittel, welches auf die Gesamtlänge der Rückentragvorrichtung bezogen ist, frei von der Akkupackaufnahme verbleibt.

In einer besonders bevorzugten Ausgestaltung weist die Akkupackaufnahme eine Aufnahmebucht auf. Es hat sich als vorteilhaft herausgestellt, wenn die Akkupackaufnahme eine Abdeckklappe zum Verschließen der Aufnahmebucht aufweist. In einer weiteren besonders bevorzugten Ausgestaltung ist die Abdeckklappe um eine Schwenkachse verschwenkbar bezüglich Aufnahmebucht an der Akkupackaufnahme angeordnet. Es hat sich als vorteilhaft herausgestellt, wenn die Schwenkachse insbesondere parallel einer Längsrichtung der Tragevorrichtung verläuft.

Die Erfindung wird ebenfalls gelöst durch ein Rückentragesystem mit einer vorbeschriebenen Rückentragvorrichtung, wobei das Rückentragesystem einen in der Akkupackaufnahme aufgenommenen oder aufzunehmenden Akkupack aufweist.

Gemäß eines eigenständig schutzfähigen Aspekts wird eine Tragvorrichtung mit einer Akkupackaufnahme zur Aufnahme eines Akkupacks angegeben, wobei die Tragvorrichtung weiter eine Anschlusseinrichtung zum Anschließen eines handgeführten Elektrogeräts aufweist. Die Tragvorrichtung ist ausgestattet mit einer Konfigurationsschnittstelle, mittels welcher eine über die Anschlusseinrichtung auszugebende Energie bezüglich Strom und/oder Spannung konfigurierbar ist. Die Tragvorrichtung kann durch die mit Bezug auf die Rückentragvorrichtung beschriebenen Merkmale in entsprechender Weise weitergebildet sein.

Weitere Vorteile ergeben sich aus der folgenden Figurenbeschreibung. In den Figuren sind besonders bevorzugte Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: ein erstes bevorzugtes Ausführungsbeispiel einer Rückentragvorrichtung, und
- Figur 2: das Ausführungsbeispiel der Figur 1, mit geöffneter Abdeckklappe.

### Ausführunasbeispiel:

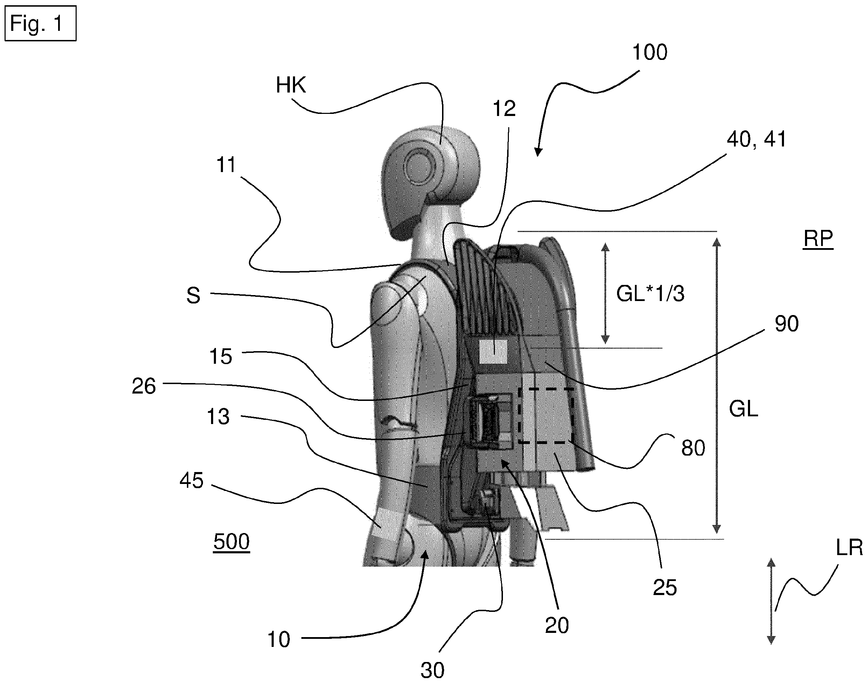

Ein erstes bevorzugtes Ausführungsbeispiel einer erfindungsgemäßen Rückentragvorrichtung 100 ist in Figur 1 dargestellt. Die Rückentragvorrichtung 100 ist ausgestattet mit einer Traggurteinheit 10 und einer Akkupackaufnahme 20 zur Aufnahme eines Akkupacks 80 (in Figur 1 gestrichelt dargestellt, da hinter der Abdeckklappe 25 befindlich). Der Akkupack 80 dient zur Energieversorgung eines hier nicht dargestellten handgeführten Elektrogeräts, beispielsweise eines Innenrüttlers. Die Rückentragvorrichtung 100 weist weiterhin eine Anschlusseinrichtung 30 zum Anschließen des Elektrogeräts auf. Die Anschlusseinrichtung 30 ist beispielhaft als 5-polige CEE Steckdose 33 ausgebildet.

Erfindungsgemäß ist die Rückentragvorrichtung 100 mit einer Konfigurationsschnittstelle 40 ausgestattet, mittels welcher eine über die Anschlusseinrichtung 30 auszugebende Energie bezüglich Strom und/oder Spannung konfigurierbar ist. Im vorliegend dargestellten Ausführungsbeispiel ist die Konfigurationsschnittstelle 40 als Touchscreen 41 ausgebildet, welches an einem Gehäuse 90 der Rückentragvorrichtung 100 angeordnet ist. Am Touchscreen 41 kann der Benutzer HK eine gewünschte Energiekonfiguration, z.B. 400 V / 16 A / 50 Hu einstellen.

Figur 1 zeigt die Akkupackaufnahme 20 in der sogenannten Rückenposition RP, das heißt insbesondere, dass eine Längsrichtung LR der Rückentragvorrichtung 100 parallel (oder zumindest im Wesentlichen parallel) zu einer Wirbelsäule des Benutzers HK verläuft. In der Rückenposition RP liegen typischerweise beide Schultergurte (in Figur 1 ist nur der Schultergurt 11 erkennbar) auf den Schultern S des Benutzers HK auf. In der Rückenposition RP umschließt der Hüftgurt 13 der Traggurteinheit 10 typischerweise eine Hüfte des Benutzers HK.

Um eine über die Anschlusseinrichtung 30 auszugebende Energie bezüglich Strom und/oder Spannung auch dann konfigurieren zu können, wenn die Akkupackaufnahme 20 in der gezeigten Rückenposition RP befindlich ist, ist der Rückentragvorrichtung 100 eine mobile Bedieneinheit 45 in Form einer Smartwatch zugeordnet. Die mobile Bedieneinheit 45 kommuniziert über eine drahtlose Verbindung mit der Konfigurationsschnittstelle 40, die ihrerseits eine drahtlose Schnittstelle aufweist.

Die Traggurteinheit 10 weist einen Schultergurt 11 auf, der auf einer Schulter S des Benutzers HK aufliegt. Die Traggurteinheit 10 in Figur 1 weist genau zwei Schultergurte auf, wobei der sichtbare Schultergurt 11 der linke Schultergurt ist. Die Traggurteinheit 10 verfügt weiterhin über eine Basisplatte 15, die mit dem Schultergurt 11 verbunden ist. Der Schultergurt 11 kann einen biegeelastischen Schulterbügel 12 aufweisen. Die Akkupackaufnahme 20 ist wiederum mit der Basisplatte 15 verbunden. Ein Hüftgurt 13 der Traggurteinheit 10 unterstützt einen Lastabtrag der Akkupackaufnahme 20. Wie der Figur 1 ebenfalls entnommen werden kann, weist die Rückentragvorrichtung 100 eine Gesamtlänge GL in Längsrichtung LR auf. Die Rückentragvorrichtung 100 verbleibt zumindest in ihrem oberen Drittel (GL*1/3) frei von der Akkupackaufnahme 20. Dies bietet eine optimale Schwerpunktverteilung.

Ein Öffnen der Abdeckklappe 25 mittels des Klappenverschlusses 26, der beispielhaft einen Handgriff aufweist, ermöglicht einen einfachen Zugriff auf den Akkupack 80. Die Rückentragvorrichtung 100 mit aufgenommenen oder aufzunehmenden Akkupack 80 bilden ein Rückentragesystem 500.

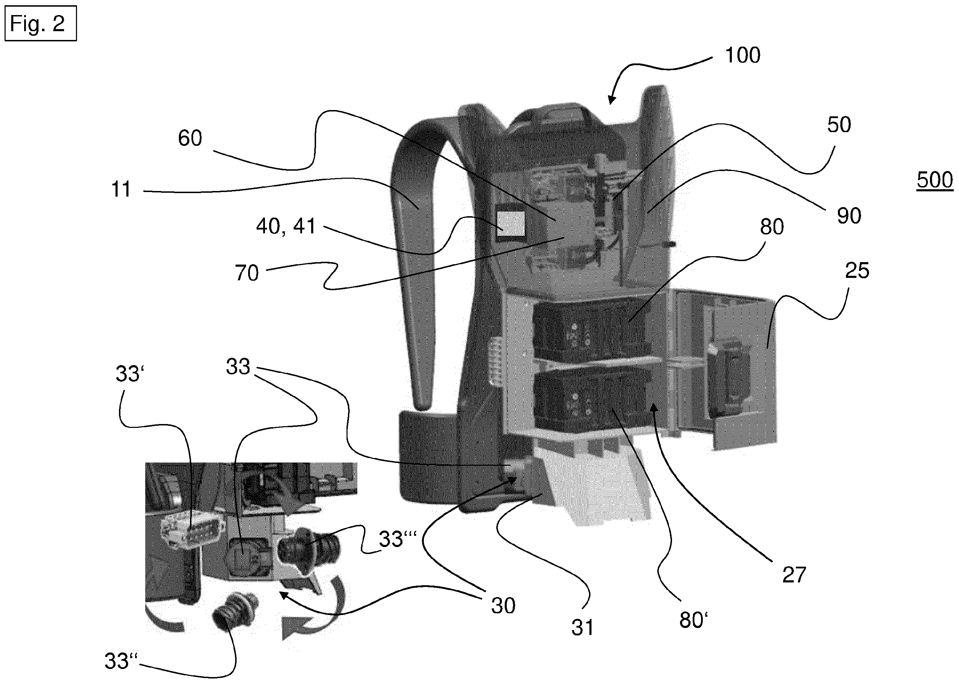

Figur 2 zeigt die Rückentragvorrichtung 100 der Figur 1, wobei die Abdeckklappe 25 geöffnet ist. Die Akkupackaufnahme 20 verfügt über eine Aufnahmebucht 27, die durch die Abdeckklappe 25 verschlossen werden kann. In der Akkupackaufnahme 20 sind vorliegend zwei Akkupacks 80, 80' gleichen Typs aufgenommen. Die Rückentragvorrichtung 100 weist eine Umschalteinrichtung 50 auf, mittels welcher zwischen einer Serienschaltung und einer Reihenschaltung der zwei Akkupacks 80, 80' umgeschaltet werden kann. Dies erfolgt über die als Touchscreen 41 ausgebildete Konfigurationsschnittstelle 40. Von dem Gehäuse 90 der Rückentragvorrichtung 100 umfasst ist ein Wechselrichter 60 und ein Gleichspannungswandler 70, die ihrerseits über die als Touchscreen 41 ausgebildete Konfigurationsschnittstelle 40 gesteuert werden können.

Wie bereits eingangs erwähnt, weist die die Rückentragvorrichtung 100 eine Anschlusseinrichtung 30 zum Anschließen des Elektrogeräts (nicht dargestellt) auf. Vorteilhafterweise ist die Anschlusseinrichtung 30 modular ausgebildet. Die Anschlusseinrichtung 30 weist einen Universalsockel 31 auf, an dem verschiedene Steckdosen 33, 33ʹ, 33ʺ, 33‴ unterschiedlichen Typs angebracht werden können. Das Rückentragesystem 500 kann, als Teils eines Auslieferungspakets, eine Mehrzahl verschiedene Steckdosen 33, 33ʹ, 33ʺ, 33‴ unterschiedlichen Typs aufweisen.

### Bezuaszeichenliste

- 10: Traggurteinheit
- 11: Schultergurt
- 12: Schulterbügel
- 13: Hüftgurt
- 15: Basisplatte
- 20: Akkupackaufnahme
- 25: Abdeckklappe
- 26: Klappenverschluss
- 27: Aufnahmebucht
- 30: Anschlusseinrichtung
- 31: Universalsockel
- 33: Steckdose (Typ 1)
- 33': Steckdose (Typ 2)
- 33": Steckdose (Typ 3)
- 33''': Steckdose (Typ 4)
- 40: Konfigurationsschnittstelle
- 41: Touchscreen
- 45: mobile Bedieneinheit
- 50: Umschalteinrichtung
- 60: Wechselrichter
- 70: Gleichspannungswandler
- 80: Akkupack
- 90: Gehäuse
- 100: Rückentragvorrichtung
- 500: Rückentragesystem

- GL: Gesamtlänge
- HK: Benutzer
- LR: Längsrichtung
- S: Schulter

## Patentansprüche

1. Rückentragvorrichtung (100) mit einer Traggurteinheit (10) und einer daran befestigten Akkupackaufnahme (20) zur Aufnahme eines Akkupacks (80), und mit einer Anschlusseinrichtung (30) zum Anschließen eines handgeführten Elektrogeräts,
**dadurch gekennzeichnet, dass** die Rückentragvorrichtung (100) eine Konfigurationsschnittstelle (40) aufweist, mittels welcher eine über die Anschlusseinrichtung (30) auszugebende Energie bezüglich Strom und/oder Spannung konfigurierbar ist.

2. Rückentragvorrichtung (100) nach Anspruch 1,
**dadurch gekennzeichnet, dass** die Akkupackaufnahme (20) ausgebildet ist, gleichzeitig zwei Akkupacks (80, 80ʹ) gleichen Typs aufzunehmen.

3. Rückentragvorrichtung (100) nach Anspruch 2,
**dadurch gekennzeichnet, dass** die Rückentragvorrichtung (100) eine Umschalteinrichtung (50) aufweist, mittels welcher zwischen einer Serienschaltung und einer Reihenschaltung der zwei Akkupacks (80, 80ʹ) umgeschaltet werden kann.

4. Rückentragvorrichtung (100) nach einem der vorangehenden Ansprüche,
**dadurch gekennzeichnet, dass** die Rückentragvorrichtung (100) sowohl einen Wechselrichter (60) als auch einen Gleichspannungswandler (70) aufweist.

5. Rückentragvorrichtung (100) nach einem der vorangehenden Ansprüche,
**dadurch gekennzeichnet, dass** die Konfigurationsschnittstelle (40) drahtlos ausgebildet ist und/oder eine drahtlose Schnittstelle aufweist.

6. Rückentragvorrichtung (100) nach Anspruch 5,
**dadurch gekennzeichnet, dass** der Rückentragvorrichtung (100) eine mobile Bedieneinheit (45) aufweist, die ausgebildet ist, eine drahtlose Verbindung mit der Konfigurationsschnittstelle (40) einzugehen.

7. Rückentragvorrichtung (100) nach einem der vorangehenden Ansprüche,
**dadurch gekennzeichnet, dass** die Anschlusseinrichtung (30) modular ausgebildet ist.

8. Rückentragvorrichtung (100) nach einem der vorangehenden Ansprüche,
**dadurch gekennzeichnet, dass** die Anschlusseinrichtung (30) einen Universalsockel (31) aufweist, an dem verschiedene Steckdosen (33) unterschiedlichen Typs angebracht werden können.

9. Rückentragvorrichtung (100) nach einem der vorangehenden Ansprüche,
**dadurch gekennzeichnet, dass** der Schultergurt (11) einen biegeelastischen Schulterbügel (12) aufweist.

10. Rückentragvorrichtung (100) nach einem der vorangehenden Ansprüche,
**dadurch gekennzeichnet, dass** die Akkupackaufnahme (20) eine Aufnahmebucht (27) und eine Abdeckklappe (25) zum Verschließen der Aufnahmebucht (27) aufweist.

11. Rückentragesystem (500) mit einer Rückentragvorrichtung (100) nach einem der vorangehenden Ansprüche, wobei das Rückentragesystem (100) ein in der Akkupackaufnahme (20) aufgenommenen oder aufzunehmenden Akkupack (80) aufweist.
